# EUROPEAN PATENT APPLICATION

(11) **EP 4 682 975 A1**
(43) Date of publication of application: **21.01.2026**
(21) Application number: 23927711.4
(22) Date of filing: 08.11.2023
(51) Int. Cl.: H01M 4/36, H01M 4/525, H01M 4/505, H01M 10/052, H01M 4/02

(54) **POSITIVE ELECTRODE ACTIVE MATERIAL FOR SECONDARY BATTERY AND SECONDARY BATTERY COMPRISING SAME**

(30) Priority: 13.03.2023 KR 20230032674; 17.07.2023 KR 20230092320
(71) Applicant: SK On Co., Ltd., Seoul 03161 (KR)
(72) Inventor: CHOI, Sung Jun, Daejeon 34124 (KR)
(74) Representative: Stolmár & Partner Patentanwälte PartG mbB
(86) International application number: PCT/KR2023/017886
(87) International publication number: WO 2024/190991

(57) **Abstract**

A cathode active material for a secondary battery and a secondary battery including the same are provided. The cathode active material for a secondary battery includes an active material core and a coating material formed on the surface of the active material core. The coating material includes niobium (Nb) as a coating element, and further includes at least one of tungsten (W) and phosphorus (P). The coating material may reduce side reactions with the electrolyte and improve charge and discharge characteristics/Coulomb efficiency.

## Description

### [Technical Field]

The present disclosure relates to a positive electrode active material (hereinafter, referred to as a "cathode active material") for a secondary battery and a secondary battery including the same. More specifically, the present disclosure relates to a cathode active material for a secondary battery, which includes active material particles and a coating component, and a secondary battery including the cathode active material.

### [Background Art]

Secondary batteries are batteries that can be repeatedly charged and discharged. With the development of information and communication and display industries, the secondary batteries have been widely applied as power sources for portable electronic communication devices, such as camcorders, mobile phones, and laptop PCs. In addition, battery packs including the secondary batteries have recently been developed and applied as power sources for eco-friendly vehicles, such as hybrid cars.

Among the secondary batteries, lithium secondary batteries are actively being researched and developed due to their high operating voltage, high energy density per unit weight, and advantages in charging speed and weight reduction.

Recently, all-solid-state batteries using a solid electrolyte have been researched and developed to suppress explosions, ignition, and the like caused by side reactions and instability of the electrolyte solution.

However, various side reactions also occur between the solid electrolyte and the cathode active material, leading to a decrease in electrochemical characteristics and efficiency. Therefore, to improve the electrochemical compatibility of the cathode active material with the solid electrolyte used in the all-solid-state batteries, it may be necessary to modify the structure or composition of the cathode active material, perform additional treatments, or enhance its properties.

### [Summary of Invention]

### [Problems to be Solved by Invention]

An object of the embodiments of the present disclosure is to provide a cathode active material for a secondary battery having improved electrochemical characteristics.

Another object of the embodiments of the present disclosure is to provide a secondary battery having improved electrochemical characteristics.

### [Means for Solving Problems]

A cathode active material for a secondary battery according to the disclosure of the present application includes: an active material core; and a coating material formed on the surface of the active material core. The coating material includes niobium (Nb) as a coating element, and further includes at least one of tungsten (W) and phosphorus (P). The content of Nb is 40% by weight to 70% by weight, based on the total weight of Nb, W and P included in the coating material.

In some embodiments, the content of the coating material may be 0.2% by weight to 2% by weight, based on the total weight of the active material core and the coating material.

In some embodiments, the content of the coating material may be 0.3% by weight to 1.5% by weight, based on the total weight of the active material core and the coating material.

In some embodiments, the content of W may be 30% by weight to 60% by weight, based on the total weight of Nb, W and P included in the coating material.

In some embodiments, the content of P may be 20% by weight or less, based on the total weight of Nb, W and P included in the coating material.

In some embodiments, the coating element may include Nb and W, and the content of Nb included in the coating material may be greater than that of W.

In some embodiments, the coating element may include Nb, W and P, and the content of Nb included in the coating material may be greater than that of each of W and P.

In some embodiments, the coating element may include Nb, W and P, and the content of Nb included in the coating material may be greater than the combined weights of W and P.

In some embodiments, the coating element may include Nb, W and P, and the content of W included in the coating material may be greater than that of P.

In some embodiments, the content of Nb may be 45% by weight to 65% by weight, based on the total weight of Nb, W and P included in the coating material.

In some embodiments, the coating material may further include a halogen element.

In some embodiments, the active material core may include a lithium-nickel metal oxide.

In some embodiments, the molar fraction of nickel may be 0.8 or more, based on the elements excluding lithium and oxygen in the lithium-nickel metal oxide.

In some embodiments, the coating material may include a lithium-niobium oxide, and may further include at least one of a lithium-tungsten oxide and a lithium-phosphorus-containing compound.

A secondary battery according to the disclosure of the present application includes: a cathode including the cathode active material according to the above-described embodiments; and an anode disposed to face the cathode.

In some embodiments, the secondary battery may further include a solid electrolyte layer which is disposed between the cathode and the anode and includes a sulfide-based solid electrolyte.

### [Advantageous effects]

The cathode active material for a secondary battery according to the above-described embodiments includes an active material core and a coating material formed on the active material core. The coating material includes Nb, and may include at least one of W and P. For example, Nb, W and P may exist in the form of a lithium-niobium compound, a lithium-tungsten compound or a lithium-phosphorus compound, respectively, thereby improving both the high-voltage stability and ion conductivity of the cathode active material.

The cathode active material may be applied to a cathode structure of an all-solid-state battery including a solid electrolyte. The coating material may prevent side reactions between the cathode active material and the solid electrolyte, and maintain or improve the electrochemical characteristics of the cathode active material. Therefore, it is possible to effectively implement a secondary battery in the form of an all-solid-state battery with increased Coulombic efficiency, while enhancing initial resistance and discharge capacity.

### [Brief Description of Drawings]

FIG. 1 is a schematic cross-sectional view illustrating a cathode active material for a secondary battery according to exemplary embodiments.
FIG. 2 is a schematic flowchart describing a method for preparing a cathode active material according to exemplary embodiments.
FIG. 3 is a schematic cross-sectional view illustrating a secondary battery according to exemplary embodiments.

### [Mode for Carrying out Invention]

The embodiments of the present disclosure provide a cathode active material for a secondary battery, which includes an active material core and a coating material. In addition, a cathode structure for a secondary battery, which includes the cathode active material, and a secondary battery are provided.

In exemplary embodiments, the cathode active material may be applied to an all-solid-state battery. However, the application range of the cathode active material is not limited to the all-solid-state battery, and may be applied to a secondary battery including an electrolyte, a separation membrane, and the like, without any particular limitation.

The drawings and embodiments attached to this specification serve to further facilitate understanding of the technical spirit disclosed in this specification, and therefore, the technical spirit of the present disclosure should not be interpreted as being limited to the matters illustrated and described in such drawings and embodiments.

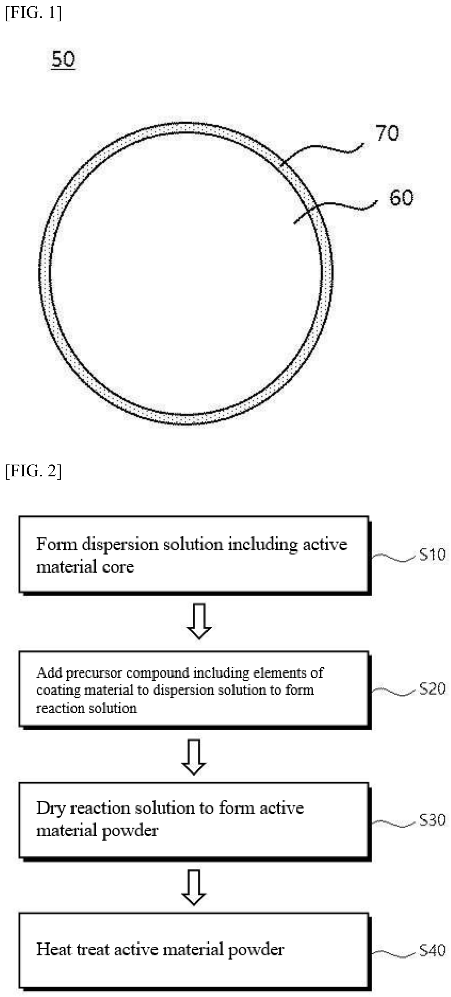

FIG. 1 is a schematic cross-sectional view illustrating a cathode active material for a secondary battery according to exemplary embodiments.

Referring to FIG. 1, a cathode active material 50 for a secondary battery (hereinafter, also abbreviated as a cathode active material) may include an active material core 60 and a coating material 70.

As shown in FIG. 1, the cathode active material 50 is provided in the form of active material particles, and a plurality of active material particles may be included in the cathode active material 50. For convenience of illustration, the cathode active material 50 is illustrated as a circle, but the cathode active material 50 may also have a rod, needle, or oval shape, etc.

The active material core 60 may include an active metal that provides the cathode activity of the secondary battery. According to exemplary embodiments, the active material core 60 may include a lithium metal oxide that provides the cathode activity of the lithium secondary battery.

According to exemplary embodiments, the lithium metal oxide may be a lithium-nickel metal oxide containing nickel (Ni). In some embodiments, the lithium metal oxide may further include at least one of manganese (Mn) and cobalt (Co).

In some embodiments, the content (molar fraction) of Ni among the elements excluding lithium and oxygen in the lithium-nickel metal oxide may be 0.6 or more, 0.7 or more, or 0.8 or more.

In one embodiment, the lithium metal oxide may include a nickel-cobalt-manganese (NCM) oxide. The content (molar fraction) of nickel based on the total moles of nickel, cobalt and manganese included in the lithium metal oxide may be the highest, and may be 0.6 or more, 0.7 or more, or 0.8 or more.

According to exemplary embodiments, the content of Ni may be 0.8 to 0.95, 0.82 to 0.95, 0.83 to 0.95, 0.84 to 0.95, 0.85 to 0.95, or 0.88 to 0.95.

Nickel may be provided as a transition metal associated with the output and capacity of the lithium secondary battery. Therefore, as described above, by employing a high-nickel-content (high-Ni) composition in the cathode active material, a high-capacity cathode and a high-capacity lithium secondary battery may be provided.

In this regard, as the content of Ni increases, long-term storage stability and cycle life stability of the cathode or the secondary battery may be relatively reduced, and side reactions with a solid electrolyte may also increase. However, according to exemplary embodiments, by including Co, the cycle life stability and capacity retention characteristics may be improved through Mn while maintaining electrical conductivity.

According to exemplary embodiments, even if the content of Ni increases to 0.8 or more, side reactions with the solid electrolyte may be suppressed by the coating material 70 described below, thereby achieving sufficient efficiency and stable charge/discharge performance.

In some embodiments, the lithium metal oxide may include a layered structure or crystal structure represented by Formula 1 below.

[Formula 1] LiₐNiₓM_{b}O₂

In Formula 1, x, a and b may satisfy 0.8≤x≤0.95, 0.95≤a≤1.2, and 0.05≤b≤0.2, and M may include at least one element selected from Na, Mg, Ca, Y, Ti, Sr, Hf, V, Nb, Ta, Cr, Mo, W, Mn, Co, Fe, Cu, Ag, Zn, B, Al, Ga, C, Si, Sn, Ba and Zr.

In one embodiment, as described above, M includes Co and Mn, and may further include at least one element selected from B, Al, Ti, V, Zn, Y, Nb, Zr, Mo, Sn, Mg, Sr, Ba and W.

For example, the elements excluding Co and Mn among the elements represented by M may be provided as doping elements or surface coating elements of the active material core 60. The active material core 60 may be passivated by the doping element or surface coating element, thereby further improving the crystal stability and chemical stability of the lithium metal oxide particles.

The chemical structure represented by Formula 1 indicates a bonding relationship between elements included in the layered structure or crystal structure of the active material core 60, and does not exclude other additional elements.

In some embodiments, the active material core 60 may include a lithium cobalt oxide-based active material, a lithium manganese oxide-based active material, a lithium nickel oxide-based active material, or a lithium iron phosphate (LFP)-based active material (e.g., LiFePO₄).

In some embodiments, the active material core 60 may include a manganese (Mn)-rich active material, or a lithium (Li)-rich layered oxide (LLO)/over-lithiated oxide (OLO)-based active material.

For example, the active material core 60 may include a chemical structure or a crystal structure represented by Formula 2 or Formula 3 below.

[Formula 2] p[Li₂MnO₃] -(1-p)[LigqJO₂]

In Formula 2, p and q may satisfy 0<p<1, and 0.9≤q≤1.2, and J may include at least one element selected from Mn, Ni, Co, Fe, Cr, V, Cu, Zn, Ti, Al, Mg and B.

[Formula 3] Li₁₊ₓM₁₋ₓO₂

In Formula 3, x may be in the range of 0≤x≤0.4, and M may include at least one element selected from Na, Mg, Ca, Y, Ti, Sr, Hf, V, Nb, Ta, Cr, Mo, W, Ni, Mn, Co, Fe, Cu, Ag, Zn, B, Al, Ga, C, Si, Sn, Ba and Zr. For example, in Formula 3, M may include Ni, Co, Mn or Al. In one embodiment, M includes Ni, Co and Mn, and optionally further includes Al.

The coating material 70 may contain niobium (Nb), tungsten (W) and/or phosphorus (P). According to embodiments of the present disclosure, the coating material 70 includes niobium (Nb), and may further include tungsten (W). In some embodiments, the coating material 70 may further include phosphorus (P).

Niobium (Nb) may be present in the form of a lithium-niobium oxide, for example, in the form of LiNbO₃. Tungsten (W) may be present in the form of a lithium-tungsten oxide, for example, in the form of Li₂WO₄ and/or LiWO₃. Phosphorus (P) may be present in the form of lithium metaphosphate (LiPO₃).

The coating material 70 may be provided as a coating layer that at least partially covers an outer surface of the active material core 60. In one embodiment, the outer surface of the active material core 60 may be substantially entirely covered by the coating layer.

In one embodiment, the coating material 70 may also partially cover the outer surface of the active material core 60. For example, the coating material 70 may be formed on the outer surface of the active material core 60, and may include a plurality of islands that are separated or spaced apart from each other.

In the case of an all-solid-state battery, a solid electrolyte and a cathode active material may be included together in the cathode, and the solid electrolyte and the cathode active material may be in direct physical contact. Accordingly, electrochemical or chemical side reactions may occur at the interface between the solid electrolyte and the cathode active material.

For example, the solid electrolyte may include a sulfide-based electrolyte, and side reactions may readily occur due to the low potential window (i.e., electrochemical stability window) of the sulfide-based electrolyte.

The cathode active material 50 according to the embodiments of the present disclosure includes the coating material 70 as described above, and the potential window of the solid electrolyte between the solid electrolyte and the active material core 60 may be increased by the coating material 70. Accordingly, side reactions between the solid electrolyte and the active material core 60 may be prevented or delayed.

Therefore, a reduction in initial efficiency of the secondary battery, a reduction in discharge capacity, and an increase in resistance due to the side reaction may be suppressed. In addition, the active material core 60 is chemically and physically protected by the coating material 70, thereby improving the stability of the cathode active material 50 under high voltage and high temperature conditions.

The lithium-niobium oxide may provide a primary matrix or backbone of the coating material 70. The lithium-niobium oxide has a relatively high lithium ion conductivity, and may provide a lithium ion transfer path on the surface of the active material core 60.

The lithium-tungsten oxide may serve as a lithium ion transfer catalyst. For example, the lithium-tungsten oxide may coexist with the lithium-niobium oxide and reduce the activation energy required for lithium ion transfer at the interface between the solid electrolyte and the cathode active material.

Through the actions of the above-described lithium-niobium oxide and/or the lithium-tungsten oxide, a side reaction barrier may be formed through the coating material 70, while lithium ion transfer is promoted. Accordingly, the electrochemical characteristics, Coulombic efficiency and discharge efficiency of the cathode active material 50 and the secondary battery may be improved.

As described above, the coating material 70 may further include a lithium-phosphorus-containing compound. The lithium-phosphorus-containing compound may increase the potential window of the solid electrolyte at the interface between the solid electrolyte and the cathode active material 50, thereby more effectively suppressing side reactions. In addition, the oxidation resistance of the cathode active material 50 may be increased by the lithium-phosphorus containing compound.

According to embodiments of the present disclosure, the content of Nb may be 40 wt% to 70 wt%, based on the total weight of Nb, W and P included in the coating material 70. In some embodiments, the content of Nb may be 40 wt% to 70 wt%, and the content of W may be 30 wt% to 60 wt%, and the content of P may be 0 wt% to 20 wt%, based on the total weight of Nb, W and P included in the coating material 70. Within the above content range, the efficiency of the secondary battery and the suppression of side reactions may be achieved in a balanced manner.

In one embodiment, the content of Nb may be 45% by weight ("wt%") to 65 wt%, the content of W may be 30 wt% to 55 wt%, and the content of P may be 0 wt% to 20 wt%. In one embodiment, the content of Nb may be 46 wt% to 65 wt%, the content of W may be 30 wt% to 53 wt%, and the content of P may be 1 wt% to 17 wt%.

Within the above content range, a more effective balance between the efficiency and the suppression of side reactions of the secondary battery may be achieved.

In some embodiments, the content (wt%) of Nb among the coating elements included in the coating material 70 may be greater than the content of each of W and P. The content of W among the coating elements included in the coating material 70 may be greater than that of P.

In some embodiments, the content of Nb among the coating elements included in the coating material 70 may be greater than the combined content of W and P.

In some embodiments, the content of W among the coating elements included in the coating material 70 may be greater than that of P.

In some embodiments, the coating material 70 may further include a halogen element. For example, fluorine (F) and/or chlorine (Cl) may be distributed within the coating material 70, and the side reaction suppression capability and the flame retardancy provided by the coating material 70 may be additionally improved. In one embodiment, the content of the halogen element may be 10 wt% or less, 5 wt% or less, 3 wt% or less, 2 wt% or less, or 1 wt% or less, based on the total weight of the coating material 70.

In some embodiments, the content of the coating material 70 may be 0.2 wt% to 2 wt%, based on the total weight of the cathode active material 50. Within the above content range, the above-described side reaction suppression or electrochemical efficiency enhancement may be sufficiently achieved without impairing the charge and discharge activity of the active material core 60. In one embodiment, the content of the coating material 70 may be 0.3 wt% to 1.5 wt%, or 0.5 wt% to 1 wt%.

FIG. 2 is a flowchart describing a method for preparing a cathode active material according to exemplary embodiments. The process described with reference to FIG. 2 is an illustrative embodiment, and the above-described cathode active material is not limited to being prepared by the embodiments shown in FIG. 2.

Referring to FIG. 2, the active material core 60 may be dispersed in a dispersion solvent to form an active material dispersion solution (e.g., step S10).

According to exemplary embodiments, the active material core 60 may be formed through a co-precipitation reaction using precursors of active metals included in the cathode active material.

For example, when the active material core 60 includes a nickel-cobalt-manganese (NCM)-based lithium oxide, the precursors of the active metals may be formed by reacting a nickel source, a cobalt source and a manganese source.

Examples of the nickel source may include nickel sulfate (NiSO₄), nickel hydroxide (Ni(OH)₂), nickel nitrate (Ni(NO₃)₂), nickel acetate (Ni(CH₃CO₂)₂, and a hydrate thereof. Examples of the manganese salt may include manganese sulfate (MnSO₄), manganese hydroxide (Mn(OH)₂), manganese nitrate (Mn(NO₃)₂), manganese acetate (Mn(CH₃CO₂)₂), and a hydrate thereof. Examples of the cobalt salt may include cobalt sulfate (CoSO₄), cobalt hydroxide (Co(OH)₂), cobalt nitrate (Co(NO₃)₂), cobalt carbonate (CoCO₃), and a hydrate thereof.

The above-described active metal sources may be mixed and reacted, for example, through a co-precipitation method, to obtain an active material precursor. For example, the active material precursor may be prepared in the form of nickel-manganese-cobalt hydroxide.

A precipitant and/or a chelating agent may be used to promote the co-precipitation reaction. The precipitant may include an alkaline compound such as sodium hydroxide (NaOH), sodium carbonate (Na₂CO₃) and the like. The chelating agent may include, for example, ammonium hydroxide, ammonium carbonate and the like.

The active material precursor may be mixed with a lithium source and reacted through heat treatment (calcination) to prepare the active material core 60. For example, the heat treatment temperature may be adjusted to the range of about 600 ° C to 1,000 ° C.

The lithium source may include, for example, lithium carbonate (Li₂CO₃), lithium nitrate (LiNO₃), lithium acetate (CH₃COOLi), lithium oxide (Li₂O), lithium hydroxide (LiOH) and the like. These may be used alone or in combination of two or more thereof. Preferably, lithium hydroxide is used as the lithium source.

In some embodiments, a washing process may be further performed after the active material core 60 is prepared. In one embodiment, a post-calcination process may be further performed after the washing process. The post-calcination process may be performed at a temperature of, for example, about 250 to 500 ° C.

The dispersion solvent may include water or an alcohol-based solvent such as ethanol.

The dispersion solution may be formed through heated stirring. In one embodiment, the heated stirring may be performed at a temperature ranging from about 40°C to 80 ° C, or from about 50°C to 70 ° C, and at a speed ranging from about 500 rpm to 900 rpm, or from about 600 rpm to 800 rpm. The heated stirring may be performed for about 20 minutes to about 1 hour.

A precursor compound including elements (Nb, W and/or P) included in the coating material 70 may be added to the dispersion solution to form a reaction solution (e.g., step S20).

For example, the precursor compound may include an alkoxide including Nb or W, a chloride, and a phosphate including P (e.g., triethyl phosphate).

The precursor compound may be added in a measured amount so as to satisfy the content range of each element included in the above-described coating material 70.

In some embodiments, a halogen-containing precursor compound may be used in combination. Accordingly, a halogen element may also be included in the coating material 70. Examples of the halogen-containing precursor compound may include ammonium hexafluorophosphate, ammonium fluoride, tungsten hexachloride, niobium pentachloride and the like.

The reaction solution may be dried to form an active material powder (for example, step S30). According to exemplary embodiments, the reaction solution may be dried through a spray drying method to obtain an active material powder.

For example, the reaction solution may be introduced into a spray drying chamber, and the coating material 70 may be uniformly coated on the surface of the active material powder through spray drying in the form of an aerosol.

The temperature in the spray drying chamber may be adjusted to the range of about 60°C to 200°C, or in the range of 70°C to 150°C.

The active material powder may be heat treated to obtain a cathode active material in which the coating material 70 is thermally stabilized (for example, step S40).

In some embodiments, the heat treatment temperature may be in the range of 250 ° C to 500 ° C. In one embodiment, the heat treatment temperature may be from 250 ° C to 400°C, or from 260°C to 350°C. Within the above range, excessive growth of the coating material 70 may be suppressed and a uniform coating may be formed.

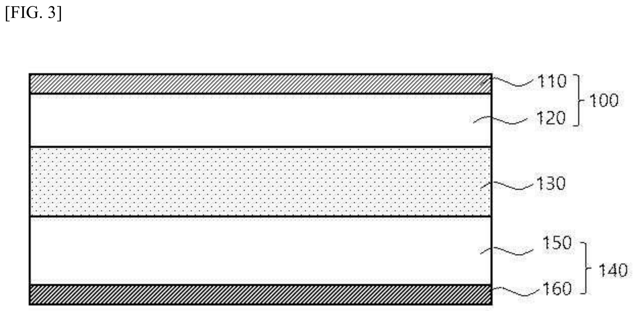

FIG. 3 is a schematic cross-sectional view illustrating a secondary battery according to exemplary embodiments.

Referring to FIG. 3, the secondary battery may include a cathode 100, a solid electrolyte layer 130, and an anode 140. The solid electrolyte layer 130 may be disposed between the cathode 100 and the anode 140.

The cathode 100 may include a cathode active material layer 120 including the above-described cathode active material. According to exemplary embodiments, the cathode active material layer 120 may include the cathode active material 50 including the above-described active material core 60 and the coating material 70, and may further include a solid electrolyte.

According to exemplary embodiments, the solid electrolyte may include a sulfide-based electrolyte. As a non-limiting example, the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li2O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, Z is Ge, Zn or Ga), Li₂S-GeS₂, Li₂S-SiS₂-Li₃PO₄, Li₂S-SiS₂-LiₚMO_{q} (p and q are positive numbers, M is P, Si, Ge, B, Al, Ga or In), Li₇-xPS₆-xClₓ (0≤x≤2), Li₇-xPS₆-xBrₓ (0≤x≤2), Li₇-xPS₆-xIₓ (0≤x≤2), etc. These may be used alone or in combination of two or more thereof.

In one embodiment, the solid electrolyte may include an oxide-based amorphous solid electrolyte, such as, for example, Li₂O-B₂O₃-P₂O₅, Li₂O-SiO₂, Li₂O-B₂O₃, Li₂O-B₂O₃-ZnO, etc.

The content of the cathode active material may be 60 wt% to 98 wt%, based on the total weight of the cathode active material layer 120. In one embodiment, the content of the cathode active material may be 70 wt% to 95 wt%, or 85 wt% to 95 wt%.

The content of the solid electrolyte based on the total weight of the cathode active material layer 120 may be 3 wt% to 35 wt%, and in one embodiment, 5 wt% to 30 wt%.

The cathode active material layer 120 may further include a binder. The binder may include an organic binder such as vinylidene fluoride-hexafluoropropylene copolymer (PVDF-co-HFP), polyvinylidene fluoride (PVDF), polyacrylonitrile, polymethyl methacrylate, acrylonitrile butadiene rubber (NBR), polybutadiene rubber (BR), styrene-butadiene-styrene rubber (SBS), or an aqueous binder such as styrene-butadiene rubber (SBR), and may be used in combination with a thickener such as carboxymethyl cellulose (CMC). In one embodiment, a PVDF-based binder may be used as the binder for the cathode.

The cathode active material layer 120 may further include a conductive material. The conductive material The conductive material may be included to promote electron mobility/conductivity between active material particles. For example, the conductive material may include carbon-based conductive materials such as graphite, carbon black, graphene, carbon nanotubes (CNTs), vapor-grown carbon fibers (VGCFs), and/or metal-based conductive materials, including perovskite materials, such as tin, tin oxide, titanium oxide, LaSrCoO₃, and LaSrMnO₃.

For example, the above-described cathode active material and the solid electrolyte may be dispersed in a solvent together with a binder, a conductive material, and the like to prepare a cathode composition (e.g., in the form of a slurry). The cathode composition may be coated on the cathode current collector 110, and then dried and roll-pressed to form the cathode active material layer 120.

The cathode current collector 110 may include a metal such as stainless steel, nickel, aluminum, titanium, copper, magnesium, iron, zinc, or an alloy thereof. In one embodiment, the cathode current collector 110 may be omitted. In this case, the cathode composition may be thermally molded using a mold to form the cathode active material layer 120.

The anode 140 may include an anode active material layer 150. The anode active material layer 150 may include an anode active material, and a carbon-based active material and/or a silicon-based active material may be used as the anode active material.

The carbon-based active material may include crystalline carbon, amorphous carbon, carbon composite, carbon fibers and the like.

For example, the amorphous carbon may include hard carbon, coke, mesocarbon microbeads, mesophase pitch-based carbon fibers and the like. For example, the crystalline carbon may include natural graphite, artificial graphite, graphitized coke, graphitized MCMB, graphitized MPCF and the like

According to exemplary embodiments, natural graphite and/or artificial graphite may be used as the carbon-based active material, and in one embodiment, a mixture of natural graphite and artificial graphite may be used.

The silicon-based active material may provide enhanced capacity characteristics. The silicon-based active material may include Si, SiOₓ (0<x<2), a silicon-carbon composite, a metal-doped silicate, or SiOₓ (0<x<2). The metal may include lithium and/or magnesium.

The silicon-based active material may provide a significantly increased capacity compared to, for example, a carbon-based material. However, the silicon-based active material may undergo excessive expansion in a high-temperature environment or during repeated charge and discharge cycles, thereby deteriorating battery stability.

Accordingly, the carbon-based active material may be used in combination with the silicon-based active material as the anode active material.

In one embodiment, a metal-based active material such as lithium (Li), gold (Au), platinum (Pt), palladium (Pd), silver (Ag), aluminum (Al), bismuth (Bi), tin (Sn), or zinc (Zn) may be used as the anode active material.

The anode active material layer 150 may further include a binder and may also include a conductive material. Materials substantially the same as or similar to the above-described binder and conductive material for the cathode may be used as the binder and conductive material for the anode. In one embodiment, an SBR-based binder may be used as the anode binder.

For example, the above-described anode active material may be dispersed in a solvent together with a binder, a conductive material, and the like to prepare an anode composition. The anode composition may be coated on an anode current collector 160, and then dried and roll-pressed to form the anode active material layer 150.

The anode current collector 160 may include a metal such as stainless steel, nickel, aluminum, titanium, copper, magnesium, iron, zinc, or an alloy thereof.

In some embodiments, a metal layer may be further formed between the anode active material layer 150 and the anode current collector 160. The metal layer may include lithium or a lithium alloy. For example, the lithium alloy may include a Li-Al alloy, a Li-Sn alloy, a Li-In alloy, a Li-Ag alloy, a Li-Au alloy, a Li-Zn alloy, a Li-Ge alloy, a Li-Si alloy and the like.

The metal layer may also be included in the anode active material layer, thereby enhancing lithium storage characteristics.

According to exemplary embodiments, the solid electrolyte layer 130 may include the above-described sulfide-based electrolyte. In one embodiment, the solid electrolyte layer 130 may include a Li₂S-P₂S₅-based material.

In one embodiment, the solid electrolyte layer 130 may include an argyrodite type compound which may be represented by Li₇-ₓPS₆-ₓClₓ (0≤x≤2), Li₇₋ₓPS₆₋ₓBrₓ (0≤x≤2), Li₇₋ₓPS₆₋ₓIₓ (0≤x≤2) and the like.

The solid electrolyte layer 130 may further include a binder together with the above-described solid electrolyte. The solid electrolyte layer 130 may include a polymer material substantially the same as or similar to the above-described binder for forming the cathode.

For example, a solid electrolyte composition including a solid electrolyte and a binder may be prepared, and then the solid electrolyte layer 130 may be formed through a press molding process using a mold.

The cathode active material layer 120 and the anode active material layer 150 may each be in contact with the solid electrolyte layer 130. For example, the cathode active material layer 120 may be in contact with one surface of the solid electrolyte layer 130, and the anode active material layer 150 may be in contact with the other surface of the solid electrolyte layer 130 facing the one surface.

As described above, the cathode active material according to the embodiments of the present disclosure may be effectively applied to an all-solid-state secondary battery using a solid electrolyte. However, the application scope of the cathode active material is not limited to the all-solid-state battery, and may be applied to a secondary battery (e.g., a pouch type, a can type, a coin cell type, etc.) using an electrolyte without any particular limitation.

In addition, the cathode active material may also be applied to a secondary battery in which a separation membrane such as a polymer layer is disposed between the cathode and the anode.

Hereinafter, examples are presented to help understand the present disclosure, but these examples are merely illustrative of the present invention and do not limit the scope of the appended claims. It will be apparent to those skilled in the art that various changes and modifications to the examples are possible within the scope and technical spirit of the present invention, and it is also understood that such changes and modifications fall within the scope of the appended claims.

### Examples and Comparative Examples

### Example 1

### 1) Preparation of cathode active material

As an active material core, 3 g of LiNi_{0.8}Co_{0.1}Mn_{0.1}O₂ was introduced into 40 ml of high-purity ethanol and stirred for 30 minutes at 55 °C and 700 rpm using a heating stirrer to form a dispersion solution.

An Nb precursor (Nb(OC₂H₅)₅) and a W precursor (WCl₆) were weighed to satisfy the coating material (coating layer) and coating element contents described in Table 1, added to the dispersion solution, and stirred to form a reaction solution.

After the reaction solution was further stirred for 30 minutes, a dry powder of the active material was obtained using a spray dryer. The dry powder of the active material was heat treated at 280° C to obtain a cathode active material having a coating layer formed on the active material core.

### 2) Manufacture of a secondary battery

The cathode active material obtained as described above was mixed with a solid electrolyte (Li₆PS₅Cl) and a conductive material (vapor-grown carbon fiber (VGCF)) to form a composite cathode mixture.

A mold having a diameter of 10 mm was prepared, and the solid electrolyte (Li₆PS₅Cl) powder was spread and then pressed to form a solid electrolyte layer. The composite cathode mixture was applied to one surface of the solid electrolyte layer and pressed to form a cathode layer. The lithium-indium mixed powder was applied to the opposite surface of the solid electrolyte layer and press-molded to manufacture an all-solid-state battery sample.

### Example 2

A cathode active material and an all-solid-state battery were manufactured in the same manner as in Example 1, except that a P precursor ((C₂H₅)₃PO₄) was additionally added and the amounts of the Nb precursor and W precursor added were adjusted to satisfy the coating material and coating element contents described in Table 1.

### Example 3

A cathode active material and an all-solid-state battery were manufactured in the same manner as in Example 1, except that the amounts of the Nb precursor and W precursor added were adjusted to satisfy the coating material and coating element contents described in Table 1.

### Example 4

A cathode active material and an all-solid-state battery were manufactured in the same manner as in Example 1, except that the amounts of the Nb precursor, W precursor and P precursor added were adjusted to satisfy the coating material and coating element contents described in Table 1.

### Comparative Example 1

A cathode active material and an all-solid-state battery were manufactured in the same manner as in Example 1, except that an active material core with no coating material formed thereon was used as the cathode active material.

### Comparative Examples 2 to 7

Cathode active materials and all-solid-state batteries were manufactured in the same manner as in Example 1, except that the coating element precursors were selected and their contents were adjusted to satisfy the types and contents of the coating material and coating elements described in Table 1.

### Comparative Example 8

A cathode active material and an all-solid-state battery were manufactured in the same manner as in Example 1, except that TEOS as a precursor was weighed and added together with the Nb precursor to satisfy the content shown in Table 1 so that Si was included together with Nb as a coating element.

### Experimental Example

### (1) Measurement of initial efficiency and discharge capacity

Constant current (CC mode) charge and discharge were performed on the all-solid-state batteries according to Examples 1 to 4 and Comparative Examples 1 to 9 under the conditions of a cutoff current of 0.1C (0.297 mA) and a voltage range of 2.0 to 3.7 V (vs. In/Li-In), and then the initial discharge capacity and Coulombic efficiency (the percentage of the initial discharge capacity relative to the initial charge capacity) were measured.

The measurement results are described in Table 1 below. Specifically, if the initial discharge capacity was 180 mAh/g or more, it was indicated as "o", and if the initial discharge capacity was less than 180 mAh/g, it was indicated as "X". In addition, if the initial Coulombic efficiency was 80% or higher, it was marked with "o", and if the initial Coulombic efficiency was less than 80%, it was marked with "X".

**[TABLE 1]**

| Classification | Coating composition/ Coating material content | Coating element content | Initial discharge capacity (mAh/g) | | Initial Coulombic efficiency (%) | |
|---|---|---|---|---|---|---|
| Example 1 | 0.5 wt% LiNbO₃ | Nb: 64.15 wt% | 188.0 | ○ | 80.3 | ○ |
| | 0.25 wt% Li₂WO₄ | W: 35.85 wt% | | | | |
| | | P: 0 wt% | | | | |
| Example 2 | 0.5 wt% LiNbO₃ | Nb: 54.18 wt% | 191.2 | ○ | 82.0 | ○ |
| | 0.25 wt% Li₂WO₄ | W: 30.28 wt% | | | | |
| | 0.25 wt.% LiPO₃ | P: 15.54 wt% | | | | |
| Example 3 | 0.5 wt% LiNbO₃ | Nb: 47.22 wt% | 188.8 | ○ | 80.7 | ○ |
| | 0.5 wt% Li₂WO₄ | W: 52.78 wt% | | | | |
| | | P: 0 wt% | | | | |
| Example 4 | 0.7 wt% LiNbO₃ | Nb: 51.88 wt% | 181.9 | ○ | 84.3 | ○ |
| | 0.35 wt% Li₂WO₄ | W: 28.99 wt% | | | | |
| | 0.45 wt% LiPO₃ | P: 19.13 wt% | | | | |
| Comparative Example 1 | - | - | 189.9 | ○ | 77.4 | X |
| Comparative Example 2 | 0.75 wt% LiNbO₃ | Nb: 100 wt% | 171.3 | X | 76.4 | X |
| | | W: 0 wt% | | | | |
| | | P: 0 wt% | | | | |
| Comparative Example 3 | 0.75 wt% LiPO₃ | Nb: 0 wt% | 175.5 | X | 78.9 | X |
| | | W: 0 wt% | | | | |
| | | P: 100 wt% | | | | |
| Comparative Example 4 | 0.75 wt% LiNbO₃ | Nb: 72.85 wt% | 185.8 | ○ | 78.8 | X |
| | 0.25 wt% Li₂WO₄ | W: 27.15 wt% | | | | |
| | | P: 0 wt% | | | | |
| Comparative Example 5 | 0.5 wt% LiNbO₃ | Nb: 77.71 wt% | 173.0 | X | 79.2 | X |
| | 0.25 wt% LiPO₃ | W: 0 wt% | | | | |
| | | P: 22.29 wt% | | | | |
| Comparative Example 6 | 0.25 wt% LiNbO₃ | Nb: 36.75 wt% | 174.1 | X | 79.6 | X |
| | 0.75 wt% LiPO₃ | P: 63.25 wt% | | | | |
| Comparative Example 7 | 0.5 wt% LiPO₃ | Nb: 0 wt% | 184.5 | ○ | 79.7 | X |
| | 0.25 wt% Li₂WO₄ | W: 49.34 wt% | | | | |
| | | P: 50.66 wt% | | | | |
| Comparative Example 8 | 0.5 wt% LiNbO₃ | Nb: 79.36 wt% | 162.2 | X | 77.0 | X |
| | 0.25 wt% Li₄SiO₄ | Si: 20.64 wt% | | | | |

Referring to Table 1, the initial discharge capacity was 180 mAh/g and the initial Coulombic efficiency was 80% or higher in Examples 1 to 4, and improved capacity/efficiency characteristics were achieved compared to Comparative Examples 1 to 8.

### (2) Measurement of initial cathode resistance

The all-solid-state batteries according to Examples 1 to 3 and Comparative Examples 1 to 8 were charged under the above-described conditions, and then the resistance was measured using electrochemical impedance spectroscopy (EIS) and Nyquist plots.

The evaluation results are shown in Table 2 below. Specifically, when the initial cathode resistance was 32 Q or less, it was marked as "○", and when it was greater than 32 Ω, it was marked as "X".

**[TABLE 2]**

| Classification | Coating composition/ Coating material content | Coating element content | Initial electrode resistance (Ω) | |
|---|---|---|---|---|
| Example 1 | 0.5 wt% LiNbO₃ | Nb: 64.15 wt% | 27.1 | ○ |
| | 0.25 wt% Li₂WO₄ | W: 35.85 wt% | | |
| | | P: 0 wt% | | |
| Example 2 | 0.5 wt% LiNbO₃ | Nb: 54.18 wt% | 31.2 | ○ |
| | 0.25 wt% Li₂WO₄ | W: 30.28 wt% | | |
| | 0.25 wt.% LiPO₃ | P: 15.54 wt% | | |
| Example 3 | 0.5 wt% LiNbO₃ | Nb: 47.22 wt% | 30.7 | ○ |
| | 0.5 wt% Li₂WO₄ | W: 52.78 wt% | | |
| | | P: 0 wt% | | |
| Comparative Example 1 | - | - | 55.2 | X |
| Comparative Example 2 | 0.75 wt% LiNbO₃ | Nb: 100 wt% | 41.0 X | |
| | | W: 0 wt% | | |
| | | P: 0 wt% | | |
| Comparative Example 3 | 0.75 wt% LiPO₃ | Nb: 0 wt% | 39.9 | X |
| | | W: 0 wt% | | |
| | | P: 100 wt% | | |
| Comparative Example 4 | 0.75 wt% LiNbO₃ | Nb: 72.85 wt% | 25.9 | X |
| | 0.25 wt% Li₂WO₄ | W: 27.15 wt% | | |
| | | P: 0 wt% | | |
| Comparative Example 5 | 0.5 wt% LiNbO₃ | Nb: 77.71 wt% | 39.2 | X |
| | 0.25 wt% LiPO₃ | W: 0 wt% | | |
| | | P: 22.29 wt% | | |
| Comparative Example 6 | 0.25 wt% LiNbO₃ | Nb: 36.75 wt% | 91.5 | X |
| | 0.75 wt% LiPO₃ | P: 63.25 wt% | | |
| Comparative Example 7 | 0.5 wt% | Nb: 0 wt% | 36.7 | X |
| | LiPO₃ 0.25 wt% Li₂WO₄ | W: 49.34 wt% | | |
| | | P: 50.66 wt% | | |
| Comparative Example 8 | 0.5 wt% LiNbO₃ | Nb: 79.36 wt% | 107.0 | X |
| | 0.25 wt% Li₄SiO₄ | Si: 20.64 wt% | | |

Referring to Table 2, the initial cathode resistance was reduced to 32 Ω or less in Examples 1 to 3.

Referring to Tables 1 and 2, in the examples, which included Nb as a coating element and W and/or P, the side reactions with the electrolyte of the secondary battery (all-solid-state battery) were reduced, and improved initial discharge capacity, initial Coulombic efficiency, and initial cathode resistance were achieved.

## Claims

1. A cathode active material for a secondary battery comprising:
an active material core; and
a coating material formed on the surface of the active material core,
wherein the coating material comprises niobium (Nb) as a coating element, and further comprises at least one of tungsten (W) and phosphorus (P), and
wherein the content of Nb is 40% by weight to 70% by weight, based on the total weight of Nb, W and P included in the coating material.

2. The cathode active material for a secondary battery according to claim 1, wherein the content of the coating material is 0.2% by weight to 2% by weight, based on the total weight of the active material core and the coating material.

3. The cathode active material for a secondary battery according to claim 1, wherein the content of the coating material is 0.3% by weight to 1.5% by weight, based on the total weight of the active material core and the coating material.

4. The cathode active material for a secondary battery according to claim 1, wherein the content of W is 30% by weight to 60% by weight, based on the total weight of Nb, W and P included in the coating material.

5. The cathode active material for a secondary battery according to claim 1, wherein the content of P is 20% by weight or less, based on the total weight of Nb, W and P included in the coating material.

6. The cathode active material for a secondary battery according to claim 1, wherein the coating element comprises Nb and W, and the content of Nb included in the coating material is greater than that of W.

7. The cathode active material for a secondary battery according to claim 6, wherein the coating element comprises Nb, W and P, and the content of Nb included in the coating material is greater than that of each of W and P.

8. The cathode active material for a secondary battery according to claim 6, wherein the coating element comprises Nb, W and P, and the content of Nb included in the coating material is greater than the combined weights of W and P.

9. The cathode active material for a secondary battery according to claim 6, wherein the coating element comprises Nb, W and P, and the content of W included in the coating material is greater than that of P.

10. The cathode active material for a secondary battery according to claim 1, wherein the content of Nb is 45% by weight to 65% by weight, based on the total weight of Nb, W and P included in the coating material.

11. The cathode active material for a secondary battery according to claim 1, wherein the coating material further comprises a halogen element.

12. The cathode active material for a secondary battery according to claim 1, wherein the active material core comprises a lithium-nickel metal oxide, and the molar fraction of nickel is 0.8 or more, based on the elements excluding lithium and oxygen in the lithium-nickel metal oxide.

13. The cathode active material for a secondary battery according to claim 1, wherein the coating material comprises a lithium-niobium oxide, and further comprises at least one of a lithium-tungsten oxide and a lithium-phosphorus-containing compound.

14. A secondary battery comprising:
a cathode comprising the cathode active material according to claim 1; and
an anode disposed to face the cathode.

15. The secondary battery according to claim 14, wherein the secondary battery further comprises a solid electrolyte layer which is disposed between the cathode and the anode and comprises a sulfide-based solid electrolyte.
